# EUROPEAN PATENT SPECIFICATION

(11) **EP 3 138 459 B1**
(45) Date of publication and mention of the grant of the patent: **05.08.2020**
(21) Application number: 14890540.9
(22) Date of filing: 12.05.2014
(51) Int. Cl.: A47L 9/28, G05D 1/02

(54) **ROBOT CLEANER AND CONTROL METHOD THEREFOR**
REINIGUNGSROBOTER UND STEUERUNGSVERFAHREN DAFÜR
ROBOT NETTOYEUR ET PROCÉDÉ DE COMMANDE ASSOCIÉ

(30) Priority: 02.05.2014 KR 20140053559
(43) Date of publication of application: 08.03.2017
(73) Proprietor: Everybot Inc., Gyeonggi-do 461-831 (KR)
(72) Inventor: SONG, Chang Nam, Jeju-si Jeju-do 690-802 (KR); KIM, Bong Yun, Jeju-si Jeju-do 690-802 (KR)
(74) Representative: Ziebig & Hengelhaupt Patent- und Rechtsanwaltskanzlei PartG mbB
(86) International application number: PCT/KR2014/004240
(87) International publication number: WO 2015/167058

(56) References cited:
- EP-A1- 2 258 247
- EP-A2- 2 720 102
- WO-A1-2009/022851
- JP-A- 2002 204 769
- KR-A- 20060 081 131
- KR-A- 20140 045 743
- KR-B1- 101 003 486

## Description

### [Technical Field]

The present invention relates to a robot cleaner and a method for controlling the same, and more particularly, to a robot cleaner capable of performing cleaning while automatically performing a traveling pattern change, and a method for controlling the same.

### [Background Art]

In accordance with the development of an industrial technology, various apparatuses have been automated. As well known, a robot cleaner has been utilized as a device automatically cleaning a target zone to be cleaned by sucking foreign materials such as dust, and the like, from a surface to be cleaned or sweeping the foreign materials on the surface to be cleaned while being spontaneously traveled within the target zone to be cleaned without being manipulated by a user.

Generally, the robot cleaner may include a vacuum cleaner performing cleaning using suction force by a power source such as electricity, or the like.

In addition, the robot cleaner including the vacuum cleaner as described above does not remove foreign materials, an ingrained stain, and the like, stuck to the surface to be cleaned. Therefore, recently, a robot cleaner capable of performing damp cloth mopping or dustcloth cleaning by including a cotton cleaner such as dustcloth, or the like, attached thereto has emerged.

However, in a dustcloth cleaning method using a general robot cleaner, the robot cleaner is generally traveled in the same pattern as that of a robot cleaner for vacuum cleaning. However, cleaning objects as well as characteristics of the vacuum cleaner and the robot cleaner performing the dustcloth cleaning are different from each other, such that traveling patterns of the vacuum cleaner and the robot cleaner should be different from each other depending on the respective robot cleaning objects.

Particularly, in the case of the dustcloth cleaning method using the general robot cleaner, the general robot cleaner is traveled using a moving pattern, an obstacle avoiding method, and the like, for an existing suction type vacuum cleaner. Therefore, even though dust, and the like, scattered on the surface to be cleaned is removed, foreign materials, and the like, stuck to the surface to be cleaned may not be easily removed.

In addition, a dustcloth or cleaner attachment structure of the general robot cleaner further includes a water supplying unit, such that an amount of supplied water is changed depending on a traveling pattern of the robot cleaner. However, a traveling pattern is applied without considering this situation, such that a problem that the cleaning is performed in a state in which water is not sufficiently supplied to the cleaner occurs.
In EP 2 258 247 A1 a robot cleaner to perform a cleaning process by changing a traveling pattern according to a cleaning start position and a method for controlling the same are disclosed. The robot cleaner recognizes a current position of the robot cleaner upon receiving the automatic cleaning command. If the automatic cleaning process starts from a charger, the robot cleaner performs the automatic cleaning process using a conventional cleaning method. Otherwise, if the automatic cleaning process starts from the outside of the charger, the robot cleaner changes a traveling pattern, performs the spot cleaning process and then selectively performs the automatic cleaning process. From WO 2009/022851 A1 a cleaning method is known, using a cleaning robot achieving high cleaning efficiency without expensive sensors. The cleaning method using the cleaning robot includes: a first step of traveling and performing a cleaning operation along a path determined by a winding pattern from a cleaning start point by the cleaning robot; a second step of, when the cleaning robot detects an obstacle, traveling and performing the cleaning operation along an outer wall of the obstacle; and a third step of, when the cleaning robot arrives at the path determined by the winding pattern while traveling and performing the cleaning operation along the obstacle, traveling and performing the cleaning operation along the remaining path determined by the winding pattern.
EP 2 720 102 A2 disclose a control method of a robot cleaner for traveling to clean includes checking information about a predetermined traveling pattern; determining a traveling trajectory based on a traveling speed; generating a traveling pattern based on the determined traveling trajectory and the information about the predetermined traveling pattern, wherein the traveling pattern includes a first straight path, a first rotation path connected to the first straight path and for rotation in a first direction, a second straight path connected to the first rotation path, and a second rotation path connected to the second straight path and for rotation in a second direction; and repeatedly traveling along the generated traveling pattern at regular intervals. Therefore, since the robot cleaner performs cleaning without scattering dust, the efficiency of cleaning may be improved.

### [Disclosure]

### [Technical Problem]

An object of the present invention is to provide a robot cleaner capable of automatically performing appropriate cleaning depending on cleaning objects in each step by storing a plurality of traveling patterns and scheduling information and sequentially changing the traveling patterns depending on predetermined conditions, and a method for controlling the same.

Another object of the present invention is to provide a robot cleaner capable of effectively performing cleaning by appropriately disposing a sequence of the sequentially changed traveling patterns depending on a condition, and a method for controlling the same.

### [Technical Solution]

According to an exemplary embodiment of the present invention, a robot cleaner includes: an input unit receiving a user input; a storing unit storing a plurality of traveling patterns and scheduling information for traveling the robot cleaner therein; and a control unit controlling the traveling of the robot cleaner depending on the user input and changing the traveling patterns on the basis of the plurality of traveling patterns and the scheduling information, wherein the scheduling information includes sequence information for sequentially changing two or more traveling patterns depending on predetermined conditions.

According to another exemplary embodiment of the present invention, a method for controlling a robot cleaner includes: storing a plurality of traveling patterns and scheduling information for traveling the robot cleaner; receiving a user input; and controlling the traveling of the robot cleaner depending on the user input and changing the traveling patterns on the basis of the plurality of traveling patterns and the scheduling information, wherein the scheduling information includes sequence information for sequentially changing two or more traveling patterns depending on predetermined conditions.

The method for controlling a robot cleaner may be implemented by a computer-readable recording medium in which a program that is to be executed in a computer is recorded.

### [Advantageous Effects]

In the method for controlling a robot cleaner according to an exemplary embodiment of the present invention, the plurality of traveling patterns and the scheduling information are stored and the traveling patterns are sequentially changed depending on the predetermined conditions, thereby making it possible to automatically perform appropriate cleaning depending on cleaning objects in each step, and cleaning traveling patterns are provided in consideration of characteristics of the dustcloth cleaning and an efficient pattern change is provided in consideration of characteristics of the respective patterns, thereby making it possible to improve cleaning efficiency.

### [Description of Drawings]

FIG. 1 is a view schematically illustrating an appearance of a robot cleaner according to an exemplary embodiment of the present invention.
FIG. 2 is a block diagram illustrating components of the robot cleaner according to an exemplary embodiment of the present invention in more detail.
FIG. 3 is a flow chart for describing a method for controlling a robot cleaner according to an exemplary embodiment of the present invention.
FIG. 4 is a view for describing a first traveling pattern of the robot cleaner according to an exemplary embodiment of the present invention.
FIG. 5 is a view for describing a second traveling pattern of the robot cleaner according to an exemplary embodiment of the present invention.
FIG. 6 is a view for describing a third traveling pattern of the robot cleaner according to an exemplary embodiment of the present invention.
FIG. 7 is a view for describing a plurality of traveling patterns stored in a storing unit of the robot cleaner according to an exemplary embodiment of the present invention.
FIG. 8 is a view for describing scheduling information stored in the storing unit of the robot cleaner according to an exemplary embodiment of the present invention.
FIGS. 9 and 10 are flow charts for describing a method for controlling a robot cleaner according to another exemplary embodiment of the present invention.

### [Best Mode]

The following description illustrates only a principle of the present invention. Therefore, those skilled in the art may implement the principle of the present invention and invent various apparatuses included in the spirit and scope of the present invention although not clearly described or illustrated in the present specification. In addition, it is to be understood that all conditional terms and exemplary embodiments mentioned in the present specification are obviously intended only to allow those skilled in the art to understand a concept of the present invention in principle, and the present invention is not limited to exemplary embodiments and states particularly mentioned as such.

Further, it is to be understood that all detailed descriptions mentioning specific exemplary embodiments of the present invention as well as principles, aspects, and exemplary embodiments of the present invention are intended to include structural and functional equivalences thereof. Further, it is to be understood that these equivalences include an equivalence that will be developed in the future as well as an equivalence that is currently well-known, that is, all devices invented so as to perform the same function regardless of a structure.

Therefore, it is to be understood that, for example, block diagrams of the present specification illustrate a conceptual aspect of an illustrative circuit for embodying a principle of the present invention. Similarly, it is to be understood that all flow charts, state transition diagrams, pseudo-codes, and the like, illustrate various processes that may be tangibly embodied in a computer-readable medium and that are executed by computers or processors regardless of whether or not the computers or the processors are clearly illustrated.

Functions of various devices including processors or functional blocks represented as concepts similar to the processors and illustrated in the accompanying drawings may be provided using hardware having capability to execute appropriate software as well as dedicated hardware. When the functions are provided by the processors, they may be provided by a single dedicated processor, a single shared processor, or a plurality of individual processors, and some of them may be shared.

In addition, terms mentioned as a processor, a control, or a concept similar to the processor or the control should not be interpreted to exclusively cite hardware having capability to execute software, but should be interpreted to implicitly include digital signal processor (DSP) hardware and a read only memory (ROM), a random access memory (RAM), and a non-volatile memory for storing software without being limited thereto. The above-mentioned terms may also include well-known other hardware.

In the claims of the present specification, components represented as means for performing functions mentioned in a detailed description are intended to include all methods of performing functions including all types of software including, for example, a combination of circuit devices performing these functions, firmware/micro codes, or the like, and are coupled to appropriate circuits for executing the software so as to execute these functions. It is to be understood that since functions provided by variously mentioned means are combined with each other and are combined with a method demanded by the claims in the present invention defined by the claims, any means capable of providing these functions are equivalent to means recognized from the present specification.

The above-mentioned objects, features, and advantages will become more obvious from the following detailed description associated with the accompanying drawings. Therefore, those skilled in the art to which the present invention pertains may easily practice a technical idea of the present invention. Further, in describing the present invention, in the case in which it is decided that a detailed description of a well-known technology associated with the present invention may unnecessarily make the gist of the present invention unclear, it will be omitted.

Hereinafter, various exemplary embodiments of the present invention will be described in detail with reference to the accompanying drawings.

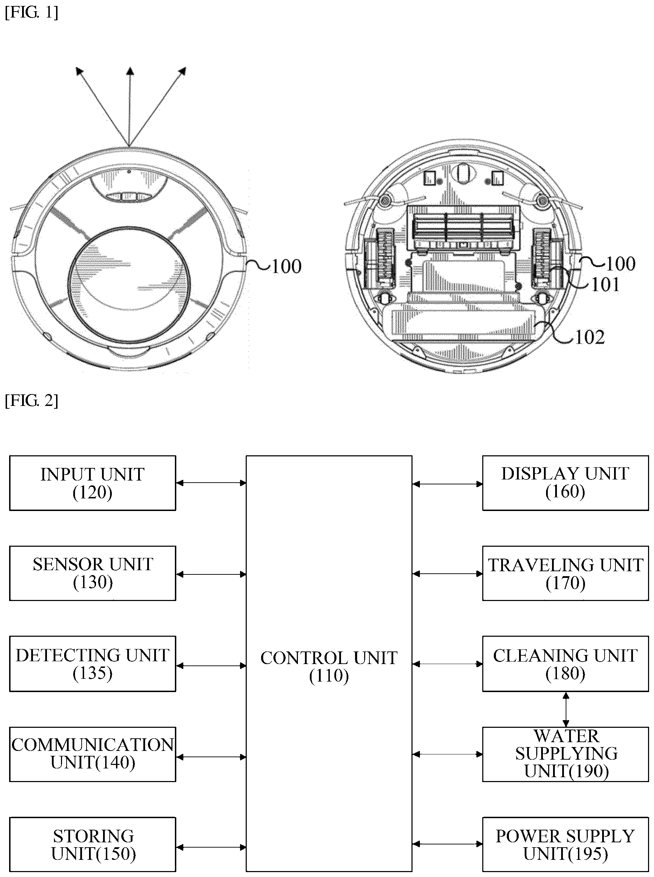

FIG. 1 is a view schematically illustrating an appearance of a robot cleaner according to an exemplary embodiment of the present invention, and FIG. 2 is a block diagram illustrating components of the robot cleaner according to an exemplary embodiment of the present invention in more detail.

Referring to FIG. 1, the robot cleaner 100 according to an exemplary embodiment of the present invention may be traveled in a specific direction on the basis of a predetermined traveling pattern in the case in which a user input is present. To this end, as illustrated in the right of FIG. 1, at least one rotation member 101 for traveling may be coupled to a lower end of the robot cleaner 100, and a traveling direction and a traveling angle of the robot cleaner 100 may be controlled by rotation of the at least one rotation member 101. The at least one rotation member 101 may be two or more wheels of which driving is controlled by, for example, a motor.

In addition, a cotton cleaner for dustcloth cleaning may be attached to a lower portion of the robot cleaner 100 according to an exemplary embodiment of the present invention. To this end, the robot cleaner 100 may further include a cleaner attachment module 102. The cleaner attached to the robot cleaner 100 may be formed of a fiber material such as cloth that may sweep various surfaces to be cleaned, such as superfine fiber cloth, dustcloth, non-woven fabric, brush, and the like, so as to remove foreign materials stuck to a bottom surface. In addition, although not illustrated in FIG. 1, a water supplying unit 190 for improving dustcloth cleaning capability of the cleaner may be further included in the robot cleaner 100.

Particularly, according to an exemplary embodiment of the present invention, traveling patterns are sequentially changed on the basis of a plurality of traveling patterns and scheduling information that are pre-stored, such that a traveling velocity and a traveling angular velocity of the robot cleaner 100 may be changed in real time.

In more detail, referring to FIG. 2, the robot cleaner 100 according to an exemplary embodiment of the present invention includes an input unit 120, a sensor unit 130, a detecting unit 135, a communication unit 140, a storing unit 150, a display unit 160, a traveling unit 170, a cleaning unit 180, a water supplying unit 190, and a power supply unit 195.

The input unit 120 may receive a button manipulation input by a user or receive a command or a control signal. The input unit 120 may generate input data for controlling an operation of the robot cleaner 100 by the user, and may be formed of a keypad, a dome switch, a touch pad (a resistive or capacitive touch pad), a jog wheel, a jog switch, or the like. The user may select a desired function or input information through the input unit 120.

In addition, the input unit 120 may receive an automatic traveling mode input according to an exemplary embodiment of the present invention or receive a mode key input, a sweep mode input, a traveling start or traveling end input, and the like. To this end, the input unit 120 may include various buttons for receiving the respective mode inputs, a soft button implemented by a touch screen, or the like.

The sensor unit 130 may be provided on a side surface of the robot cleaner 100 in order to detect an obstacle.

The sensor unit 130 senses a surrounding state of the robot cleaner 100 to generate a sensed signal for controlling an operation of the robot cleaner 100. In addition, the sensor unit 130 may transfer the sensed signal detected depending on the surrounding state to the detecting unit 135. The sensor unit 130 may include an obstacle detecting sensor transmitting an infrared or ultrasonic signal to the outside and receiving a signal reflected from an obstacle. In addition, the sensor unit 130 may include a camera sensor generating image information and transmitting the generated image information or filtering the image information and outputting sensed surrounding information, or the like.

The detecting unit 135 may detect an object, an obstacle, or the like, present in any specific area on the basis of the information sensed in the sensor unit 130. For example, the detecting unit 135 may detect an obstacle positioned in front of the robot cleaner 100 on the basis of a proceeding direction or detect an obstacle positioned behind the robot cleaner 100 on the basis of the proceeding direction. The detecting unit may detect a position of the obstacle and a distance up to the obstacle or collision with the obstacle from an ultrasonic sensor signal, an infrared sensor signal, a radio frequency (RF) sensor signal, or image data detected in the sensor unit 130.

The communication unit 140 may include one or more modules enabling wireless communication between the robot cleaner 100 and another wireless terminal or between the robot cleaner 100 and a network in which another wireless terminal is positioned. For example, the communication unit 140 may communicate with a wireless terminal, which is a remote controller. To this end, the communication unit 140 may include a near field communication module, a wireless Internet module, or the like.

An operation state, an operation method, or the like, of the robot cleaner 100 may be controlled by a control signal received by the communication unit 140 as described above. An example of a terminal controlling the robot cleaner 100 may include a smart phone, a tablet personal computer, a personal computer, a remote controller, and the like, that may communicate with the robot cleaner 100.

Meanwhile, the storing unit 150 may store various user interfaces or graphic user interfaces therein or store a program for an operation of a control unit 110 therein, and temporarily store input/output data therein. The storing unit 150 may include at least one of a flash memory type storage medium, a hard disk type storage medium, a multimedia card micro type storage medium, a card type memory (for example, an SD or XD memory, or the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk.

Particularly, according to an exemplary embodiment of the present invention, the storing unit 150 may store information on a plurality of traveling patterns and scheduling information therein. The scheduling information may include sequence information for sequentially changing two or more traveling patterns depending on predetermined conditions by the control unit 110.

The display unit 160 may be provided on an upper surface or a side surface of the robot cleaner 100, and may display various information generated by the control unit 110. Here, the display unit 160 may include at least one of a liquid crystal display (LCD), a thin film transistor-liquid crystal display (TFT LCD), an organic light-emitting diode (OLED), a flexible display, a field emission display (FED), a 3D display, and a transparent display.

In addition, the display unit 160 may further include a sound output module, an alarm unit, and the like.

The traveling unit 170 generates a control signal for rotating the rotation member depending on a control of the control unit 110. The traveling unit 170 may be formed of an assembly coupled to a motor, a gear, and the like, in order to drive one or more rotation members.

The traveling unit 170 may perform a traveling operation such as movement, stop, a velocity control, a direction change, or an angular velocity change, or the like, by a control of the control unit 110. To this end, sensors such as an encoder, and the like, may be connected to the traveling unit 170.

Meanwhile, the cleaning unit 180 may be provided on a lower surface of the robot cleaner 100, and performs a cleaning operation of absorbing foreign materials below the robot cleaner 100 or conducting mopping when the robot cleaner 100 is moving or is being stopped, by a control of the control unit 110. In addition, the cleaning unit 180 may further include an air purifying unit purifying pollutants in the air.

Particularly, in an exemplary embodiment of the present invention, the cleaning unit 180 may include the cleaner attachment module 102. A cotton cleaner such as dustcloth, or the like, may be attached to the cleaner attachment module 102. Therefore, when the cotton cleaner is attached to the cleaning unit 180, the robot cleaner 100 may perform dustcloth cleaning for sweeping foreign materials stuck to the bottom surface by friction between the robot cleaner 100 and the bottom surface.

The water supplying unit 190 continuously supplies water through the cleaner attachment module 102 as described above, thereby making it possible to improve sweeping performance of the cleaner. For example, the water supplying unit 190 may perform a control so that the water is continuously supplied to the dustcloth in the case in which the dustcloth is attached. An amount of supplied water may be controlled by a function of the water supplying unit 190 itself or be physically controlled by the control unit 110.

The control unit 110 usually controls a general operation of the robot cleaner 100. For example, the control unit 110 performs processes and controls related to cleaning time decision, cleaning route determination, traveling pattern selection, a sequential change of traveling patterns depending on scheduling information, obstacle avoidance, or the like.

Particularly, according to an exemplary embodiment of the present invention, the control unit 110 may sequentially change the traveling patterns depending on sequence information in the scheduling information stored in the storing unit 150. The scheduling information may include the sequence information for changing the plurality of traveling patterns depending on a sequence, and time information allocated to each of the plurality of traveling patterns.

For example, in the case in which an automatic traveling mode is input depending on a user input, the control unit 110 may identify a first traveling pattern depending on predetermined sequence information, and control the first traveling pattern to be performed for a first time, change the first traveling pattern into a second traveling pattern and control the second traveling pattern to be performed for a second time, and change the second traveling pattern into a third traveling pattern and control the third traveling pattern to be performed for a third time depending on time information.

Particularly, the plurality of traveling patterns may include traveling patterns in which cleaning area coverages per unit time are different from each other.

In this case, a moving velocity of the robot cleaner 100 may be varied depending on the sequential change of the traveling patterns by the sequence information. The control unit 110 sequentially changes the traveling patterns so that a traveling pattern in which the moving velocity is rapid is first performed depending on the sequence information, thereby making it possible to control the robot cleaner to rapidly clean a wide area at the early stage of a cleaning time and gradually and slowly perform elaborate cleaning at the late stage of the cleaning time.

In addition, the plurality of traveling patterns may include traveling patterns in which amounts of water supplied per unit time from the water supplying unit 190 are different from each other.

In this case, a movement or shaking level of the robot cleaner 100 may be varied by the change of the traveling patterns. Therefore, an amount of water supplied per unit time from the water supplying unit 190 may be varied.

In the related art, a general robot cleaner including dustcloth is forcibly moved in a state in which water is not sufficiently supplied to the dustcloth, such that a dustcloth cleaning effect is decreased.

Therefore, according to an exemplary embodiment of the present invention, the control unit 110 may sequentially change the traveling patterns so that a traveling pattern in which the amount of water supplied per unit time is large is first performed depending on the sequence information. The control unit 110 performs the control as described above, thereby making it possible to rapidly soak the dustcloth in the water depending on rapid traveling at the early stage of the cleaning time and gradually change the traveling pattern into a traveling pattern for dustcloth cleaning, or the like, at the late stage of the cleaning time. Therefore, an efficient pattern change in which the dustcloth cleaning and vacuum cleaning are appropriately combined with each other is also possible.

For example, when the cleaning time is divided into a first time section, a second time section, and a third time section, the control unit 110 may perform the first traveling pattern in the first time section so that a traveling velocity is rapid and the water is rapidly absorbed in the dustcloth from the water supplying unit 190 while rapidly changing the center of gravity of the robot cleaner, in the first time section.

Then, in the second time section, the control unit 110 may change the traveling pattern into the second traveling pattern generating centrifugal force to allow the water absorbed in the dustcloth from the water supplying unit 190 to be rapidly spread over the entire dustcloth.

In addition, in the third time section, the control unit 110 may change the traveling pattern into the third traveling pattern capable of maximizing efficiency of the dustcloth cleaning to allow cleaning to be repeatedly performed at least twice in the same section and perform a control while changing a direction leftward or rightward in order to secure an efficient cleaning area.

Meanwhile, in the case in which a sweep mode is selected depending on a user input, the control unit 110 may further improve the efficiency of the dustcloth cleaning by applying characteristics of the robot cleaner returned by a second distance shorter than a first distance along a predetermined route when the robot cleaner is traveled by the first distance along the predetermined route, with respect to a traveling pattern that is being currently performed. This will be described below.

In addition, the power supply unit 195 supplies operation power of the robot cleaner 100, and stores power supplied from an external power supply therein or is charged with the power. To this end, the power supply unit 195 may include one or more batteries. The power supply unit 195 may receive the power from the external power supply in a wired or wireless charging scheme.

As described above, the control unit 110 sequentially changes the traveling patterns depending on the predetermined conditions to appropriately combine the amount of water supplied per unit time and the cleaning area coverage with each other, thereby making it possible to maximize combination efficiency between the dustcloth cleaning and the vacuum cleaning.

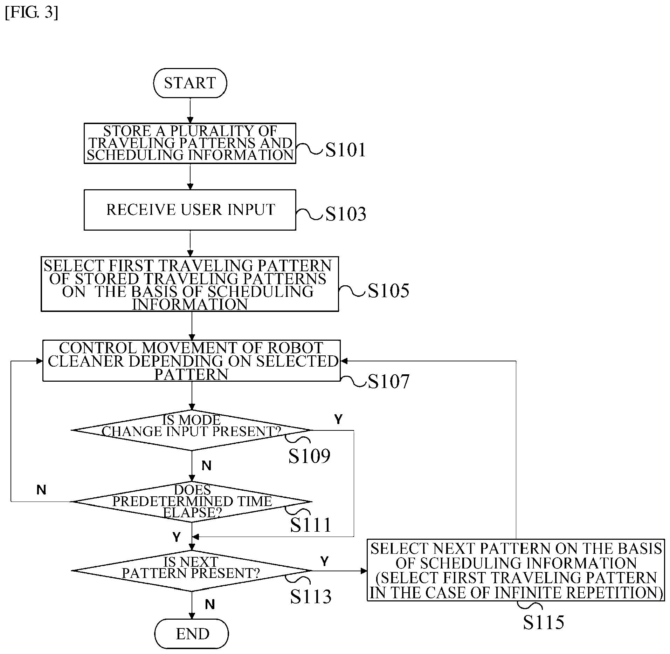

FIG. 3 is a flow chart for describing a method for controlling a robot cleaner 100 according to an exemplary embodiment of the present invention.

Referring to FIG. 3, the robot cleaner 100 according to an exemplary embodiment of the present invention stores the plurality of traveling patterns and the scheduling information (S101).

The storing unit 150 may store the plurality of traveling patterns and the scheduling information that are predetermined therein, as described above. The plurality of traveling patterns may include various patterns in which the cleaning area coverages per unit time, the amounts of water supplied per unit time, or cleaning concentration levels are different from each other.

The scheduling information may include the sequence information for sequentially arranging the plurality of traveling patterns as described above, and the time information corresponding to each of the traveling patterns. Here, the information on each of the traveling patterns or the scheduling information stored in the storing unit 150 may be pre-stored in a non-volatile memory or be temporarily stored in a volatile memory.

Here, the traveling patterns and the scheduling information stored in the storing unit 150 may be updated at a predetermined period, be updated whenever the robot cleaner 100 is connected to the Internet network, or the like, or be received from a network whenever the robot cleaner 100 starts cleaning and be temporally stored, through the communication unit 140. Therefore, whenever appropriate traveling patterns and scheduling information on the appropriate traveling patterns are improved, the user may update the appropriate traveling patterns and the scheduling information, thereby making it possible to improve performance in real time.

Then, the robot cleaner 100 receives a user input for starting the cleaning (S103).

Particularly, in an exemplary embodiment of the present invention, a traveling pattern change function depending on the plurality of traveling patterns and the scheduling information may be performed in an automatic cleaning mode depending on the user input. The user selects only the automatic cleaning mode without directly selecting all of the plurality of traveling patterns, thereby making it possible to simply operate a cleaning mode in which the plurality of traveling patterns are efficiently combined with each other.

Then, the robot cleaner 100 selects the first traveling pattern of the traveling patterns stored in the storing unit 150 on the basis of the scheduling information (S105), and movement of the robot cleaner is controlled depending on the selected traveling pattern (S107).

The control unit 110 may control the robot cleaner 100 to perform the first traveling pattern for a predetermined time depending on the sequence information and the time information of the pre-stored scheduling information. The first traveling pattern may be a traveling pattern first designated in the sequence information.

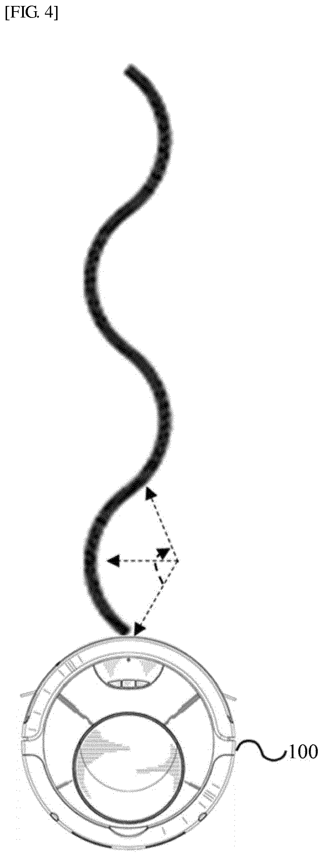

Hereinafter, the traveling patterns as described above and a control of movement of the robot cleaner 100 depending on the traveling patterns will be described with reference to FIGS. 4 to 8.

The plurality of traveling patterns according to an exemplary embodiment of the present invention may include the first traveling pattern, the second traveling pattern, or the third traveling pattern. However, the traveling patterns as described above are only an example, and it is obvious that various traveling patterns in which the cleaning area coverages per unit time, moving velocities per unit time, the amounts of water supplied per unit time, the cleaning concentration levels, or the like, are different from each other may be further included.

FIG. 4 is a view for describing a first traveling pattern according to an exemplary embodiment of the present invention.

The first traveling pattern according to an exemplary embodiment of the present invention may include a pattern controlling the robot cleaner to be traveled in a curved form by periodically controlling a predefined angular velocity on the basis of a proceeding direction of the robot cleaner 100 depending on a moving velocity of the robot cleaner 100, as illustrated in FIG. 4.

The control unit 110 controls the traveling unit 170 to move the rotor cleaner 100 at a traveling velocity, and controls a predefined angular velocity depending on change characteristics of a section 0 to 2^{∗}pi of a cosine function curve corresponding to a predetermined period on the basis of a central portion of an arc based on the proceeding direction, thereby making it possible to allow the robot cleaner 100 to proceed in an 'S' shape. In this case, an angular velocity changed in real time may be represented by Equation: Reference Angular Velocity^{∗}cos(2^{∗}pi ^{∗}Period Ratio).

The control unit 110 may control traveling depending on characteristics of a sensed value sensed in the sensor unit 130, and may decrease a moving velocity and maintain a change in an angular velocity when the detecting unit 135 detects when the robot cleaner approaches an obstacle.

In the case of the first traveling pattern as described above, a moving velocity may be relatively faster than those in the other traveling patterns, and a cleaning area coverage per unit time may be relatively larger than those in the other traveling patterns. In addition, the water supplying unit 190 may be significantly shaken leftward and rightward through the movement of the robot cleaner in the 'S' shape. Therefore, a velocity at which the water is supplied from the water supplying unit 190 to the dustcloth of the cleaning unit 180 may be increased.

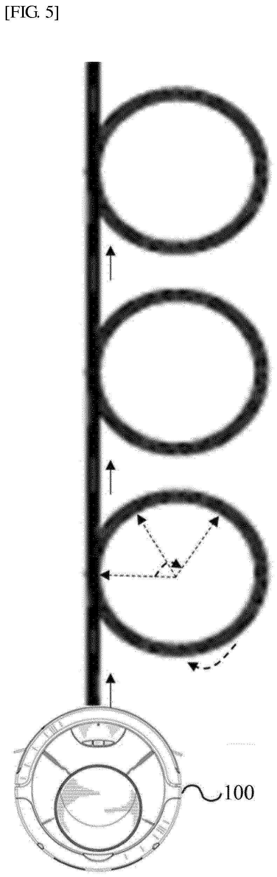

FIG. 5 is a view for describing a second traveling pattern according to an exemplary embodiment of the present invention.

The second traveling pattern according to an exemplary embodiment of the present invention may be a pattern controlling the robot cleaner to periodically move along circular routes based on a linear proceeding section of the robot cleaner and then proceed along the linear proceeding section depending on a moving velocity of the robot cleaner, as illustrated in FIG. 5.

The control unit 110 controls the traveling unit 170 to move the rotor cleaner 100 at a traveling velocity, and controls a predefined angular velocity depending on change characteristics of a section 0 to 2^{∗}pi of a cosine function curve corresponding to a predetermined period on the basis of a central portion of a circle of which a tangent line is the linear proceeding section, thereby making it possible to allow the robot cleaner 100 to proceed in a circular shape. In this case, an angular velocity changed in real time may be represented by Equation: Predefined Angular Velocity/2^{∗}-((Predefined Angular Velocity/2)^{∗}cos(2^{∗}pi^{∗}Period Ratio).

In addition, the control unit 110 may control traveling depending on characteristics of a sensed value sensed in the sensor unit 130, and may decrease a moving velocity and maintain a change in an angular velocity when the detecting unit 135 detects when the robot cleaner approaches an obstacle.

Particularly, the control unit 110 may perform obstacle avoidance traveling depending on the detection of the obstacle by the detecting unit 135. In this case, a radius of the circular route may be increased or decreased depending on a condition.

In addition, the control unit 110 may also perform a direction change at a point in time in which a control direction is changed by the obstacle sensing, or the like, so that a direction of centrifugal force depending on movement along the circular route may be changed.

In the case of the second traveling pattern as described above, a moving velocity may be relatively slower than that of the first traveling pattern, and a cleaning area coverage per unit time may be relatively smaller than that in the first traveling pattern. However, a cleaning concentration level on a cleaning area may become high. In addition, the circular route is controlled depending on the pattern to generate centrifugal force, thereby making it possible to allow the water absorbed in the cleaner such as the dustcloth, or the like, attached to the cleaning unit 180 from the water supplying unit 190 to be rapidly spread over the entire cleaner.

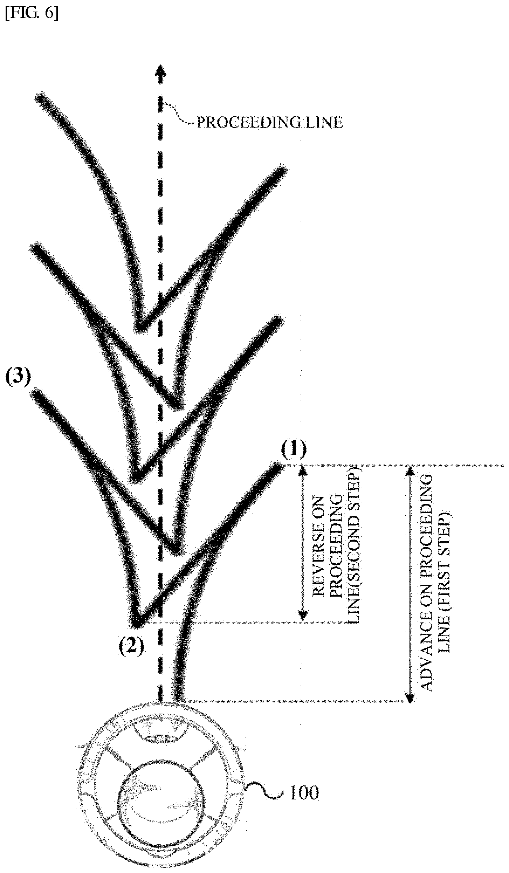

FIG. 6 is a view for describing a third traveling pattern according to an exemplary embodiment of the present invention.

The third traveling pattern according to an exemplary embodiment of the present invention may include a pattern including a first step of moving the robot cleaner 100 in an advance direction of one side diagonal on the basis of a proceeding line of the robot cleaner 100 and a second step of moving the robot cleaner 100 in a reverse direction of the other side diagonal in a state in which the robot cleaner 100 advances and characterized in that an advance distance of the first step is longer than a reverse distance of the second step on the basis of a distance on the proceeding line, as illustrated in FIG. 6, and the first step and the second step are repeated, such that the robot cleaner 100 may perform concentrative cleaning while advancing along the proceeding line.

The control unit 110 controls the traveling unit 170, thereby making it possible to move the robot cleaner 100 in a zigzag form so as to cover cleaning areas widened to both sides while partially repeatedly moving in the same section.

In the case of the first step, the control unit 110 may control the robot cleaner 100 to move along one of left and right diagonals on the basis of the proceeding line. In this case, it may be described that the robot cleaner 100 advances on the basis of the proceeding line. In the case of the advance, the robot cleaner may move in a curved form having a predetermined angular velocity in order to form a coverage.

Then, in the case of the first step, the control unit 110 may control the robot cleaner 100 to reverse along the other side diagonal on the basis of the proceeding line. In the case of the reverse, the robot cleaner may move in a linear form so that cleaning areas partially overlap with each other or move at an angular velocity smaller than that in the advance.

Here, the advance distance in the first step may be longer than the reverse distance in the second step on the basis of the proceeding line. Therefore, the robot cleaner 100 may gradually advance on the basis of the proceeding line.

In order for the third traveling pattern as described above to be smoothly performed, the reverse distance may be preferably equal to or larger than a half of the advance distance. In this case, an appropriate cleaning coverage having a zigzag form appropriate for the dustcloth cleaning as illustrated in FIG. 6 may be formed.

Meanwhile, the control unit 110 may control the traveling depending on the characteristics of the sensed value sensed in the sensor unit 130, and may decrease or increase a moving velocity when the detecting unit 135 detects when the robot cleaner approaches an obstacle.

In addition, the control unit 110 predicts a position of the obstacle after avoidance while changing a control direction by the obstacle sensing, or the like, thereby making it possible to determine a movement sequence of the left and the right.

Particularly, the control unit 110 detects a difference between a predicted moving distance and an actual moving distance during the advance or the reverse and performs an acceleration or deceleration control, thereby making it possible to allow a cleaning coverage to be accurately formed.

In the case of the third traveling pattern as described above, a moving velocity may be relatively slower than that of the second traveling pattern, and a cleaning area coverage per unit time may be relatively smaller than that in the second traveling pattern. However, a cleaning concentration level on a cleaning area may be maximized. In the case of the third traveling pattern, the cleaning may be repeatedly performed at least twice in the same section, and the control may be performed while changing a direction leftward or rightward in order to secure an efficient cleaning area.

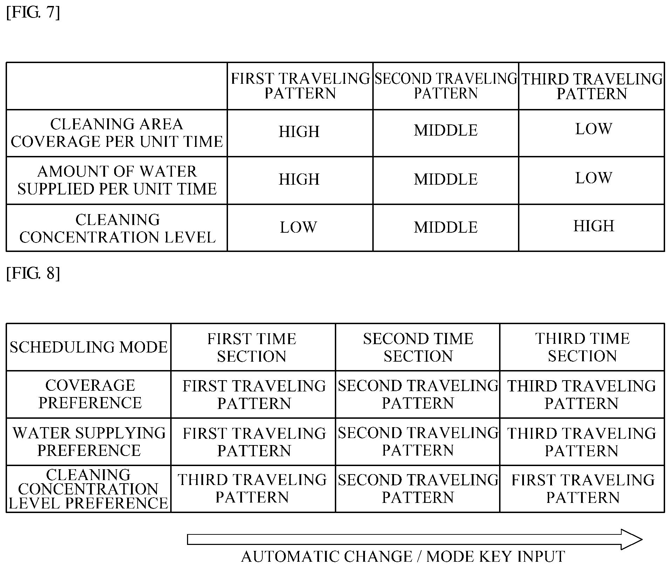

FIG. 7 is a table for describing characteristics of the respective traveling patterns according to an exemplary embodiment of the present invention, and FIG. 8 is a table for describing scheduling information scheduled on the basis of the characteristics of the traveling patterns.

Referring to FIGS. 7 and 8, the control unit 110 according to an exemplary embodiment of the present invention may select an appropriate mode depending on scheduling modes preset in the scheduling information stored in the storing unit 150, select different traveling patterns in each specific time section, and sequentially perform the selected traveling patterns.

Particularly, as illustrated in FIG. 8, the scheduling modes may be a coverage preference mode, a water supplying preference mode, and a cleaning concentration level preference mode, and the control unit 110 may sequentially and automatically change the traveling patterns depending on the time sections or immediately change the traveling patterns depending on a mode key input of the user, in each mode.

Again, a description will be provided with reference to FIG. 3.

During a period in which the movement of the robot cleaner 100 is controlled depending on the selected pattern, the robot cleaner 100 decides whether or not a mode change input is present (S109).

The user may command the robot cleaner to skip a current mode and change a mode into another mode depending on a situation. To this end, the input unit 120 may include a mode change key, and in the case in which the mode change input of the user is present, the robot cleaner 100 decides whether or not the next pattern is present (S113), and selects the next pattern depending on the scheduling information (S115). When the next pattern is selected, the method for controlling a robot cleaner 100 returns to S107, and when the next pattern is not present, the cleaning ends.

In addition, the robot cleaner 100 decides whether or not a predetermined time elapses depending on a time section corresponding to the selected pattern in a state in which the mode change input is not present (Sill). In the case in which the predetermined time elapses, the robot cleaner 100 decides whether or not the next pattern is present (S113), and selects the next pattern depending on the scheduling information (S115). When the next pattern is selected, the method for controlling a robot cleaner 100 returns to S107, and when the next pattern is not present, the cleaning ends.

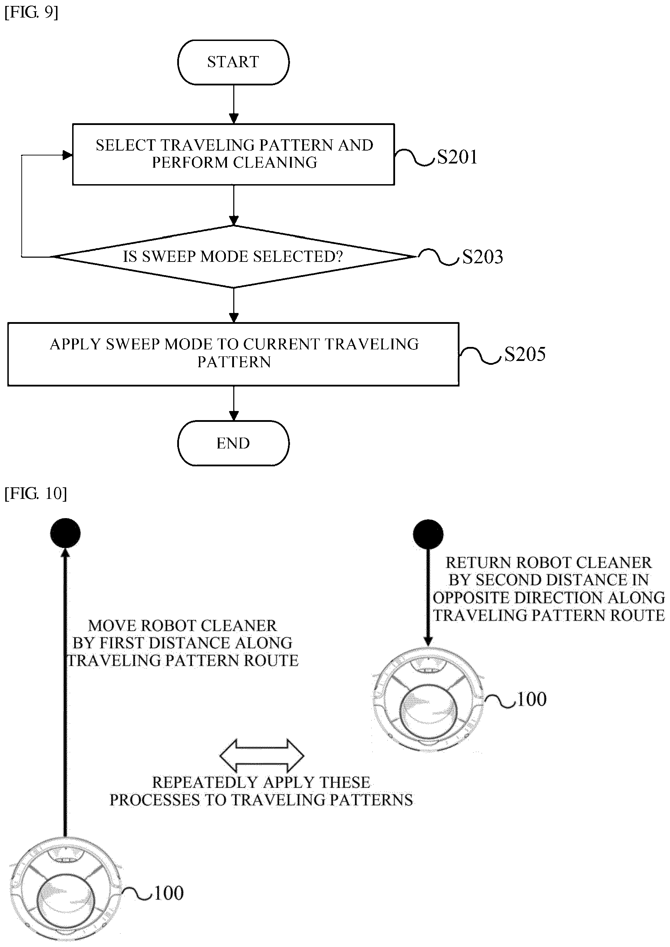

FIGS. 9 and 10 are flow charts for describing a method for controlling a robot cleaner according to another exemplary embodiment of the present invention.

Referring to FIG. 9, the robot cleaner 100 selects a traveling pattern and performs cleaning (S201).

The control unit 110 of the robot cleaner 100 may select an appropriate traveling mode depending on the scheduling information and perform the cleaning.

Then, the robot cleaner 100 decides whether or not a sweep mode is selected (S203), and applies the sweep mode to a current traveling pattern (S205) in the case in which the sweep mode is selected.

The user may command the robot cleaner to apply the sweep mode through the input unit 120. The control unit 110 may perform a control so that the current traveling pattern is operated in the sweep mode when the sweep mode command is recognized.

Here, the sweep mode according to an exemplary embodiment of the present invention may be generally an additional pattern applied together with a dustcloth cleaning mode. FIG. 10 illustrates a change of a traveling pattern in the case in which the sweep mode is applied.

As illustrated in FIG. 10, in the case in which the sweep mode is applied, the control unit 110 controls the robot cleaner 100 to periodically repeat a process in which the robot cleaner 100 moves by a first distance along a predetermined traveling pattern route and then returns by a second distance in an opposite direction along the traveling pattern route, thereby making it possible to allow the robot cleaner 100 to perform cleaning while repeatedly moving along the same route. Here, for the purpose of normal proceeding, the second distance needs to be shorter than the first distance. Preferably, the second distance may correspond to a half of the first distance.

In addition, the control unit 110 may perform a direction control operation such as avoidance depending on an existing traveling pattern, or the like, in the case in which an obstacle is detected in a state to which the sweep mode is applied.

The sweep mode as described above may be applied to a basic random traveling pattern, a straight traveling pattern, or the like, as well as the first traveling pattern, the second traveling pattern, or the third traveling pattern described above.

The methods for controlling a robot cleaner according to various exemplary embodiments of the present invention described above may be implemented by program codes and be provided in the respective servers or apparatuses in a state in which it is stored in various non-transitory computer-readable media.

The non-transitory computer-readable medium is not a medium that stores data therein for a while, such as a register, a cache, a memory, or the like, but means a medium that semi-permanently stores data therein and is readable by a device. In detail, various applications or programs described above may be stored and provided in the non-transitory computer-readable medium such as a compact disk (CD), a digital versatile disk (DVD), a hard disk, a Blu-ray disk, a universal serial bus (USB), a memory card, a read only memory (ROM), or the like.

## Claims

1. A robot cleaner (100) comprising:
an input unit (120) receiving a user input;
a storing unit (150) storing a plurality of traveling patterns and scheduling information for traveling the robot cleaner (100) therein;
a water supplying unit (150) supplying water to a cleaner attached to the robot cleaner (100); and
a control unit (110) controlling the traveling of the robot cleaner (100) depending on the user input and changing the traveling patterns on the basis of the plurality of traveling patterns and the scheduling information,
**characterized in that** the scheduling information includes sequence information for sequentially changing two or more traveling patterns depending on predetermined conditions; and at least one of cleaning area coverage, moving velocity, an amount of water supplied from the water supplying unit (150) per unit time and a cleaning concentration level is varied by movement of the robot cleaner (100) depending on the sequential change of the traveling patterns by the sequence information.

2. The robot cleaner (100) of claim 1, wherein the control unit (110) sequentially changes the traveling patterns so that a traveling pattern in which the amount of water supplied per unit time is large is first performed depending on the sequence information.

3. The robot cleaner (100) of any one of claims 1 to 2, wherein a moving velocity of the robot cleaner (100) is varied depending on the sequential change of the traveling patterns by the sequence information, and the control unit (110) sequentially changes the traveling patterns so that a traveling pattern in which the moving velocity is rapid is first performed depending on the sequence information.

4. The robot cleaner (100) of any one of claims 1 to 3, wherein a first traveling pattern of the plurality of traveling patterns is a pattern controlling the robot cleaner (100) to be traveled in a curved form by periodically controlling a predefined angular velocity on the basis of a proceeding direction of the robot cleaner (100) depending on a moving velocity of the robot cleaner (100).

5. The robot cleaner (100) of any one of claims 1 to 4, wherein a second traveling pattern of the plurality of traveling patterns is a pattern controlling the robot cleaner (100) to periodically move along circular routes based on a linear proceeding section of the robot cleaner (100) and then proceed along the linear proceeding section depending on a moving velocity of the robot cleaner (100).

6. The robot cleaner (100) of any one of claims 1 to 5, wherein a third traveling pattern of the plurality of traveling patterns is a pattern including a first step of moving the robot cleaner (100) in an advance direction of one side diagonal on the basis of a proceeding line of the robot cleaner (100) and a second step of moving the robot cleaner (100) in a reverse direction of the other side diagonal in a state in which the robot cleaner (100) advances, an advance distance of the first step being longer than a reverse distance of the second step on the basis of a distance on the proceeding line.

7. The robot cleaner (100) of any one of claims 1 to 6, wherein the control unit (110) applies characteristics of the robot cleaner (100) returned by a second distance shorter than a first distance along a predetermined route when the robot cleaner (100) is traveled by the first distance along the predetermined route, with respect to a traveling pattern that is being currently performed, in the case in which a sweep mode is selected depending on the user input.

8. A method for controlling a robot cleaner, comprising:
storing a plurality of traveling patterns and scheduling information for traveling the robot cleaner;
receiving a user input; and
controlling the traveling of the robot cleaner depending on the user input and changing the traveling patterns on the basis of the plurality of traveling patterns and the scheduling information,
**characterized in that** the scheduling information includes sequence information for sequentially changing two or more traveling patterns depending on predetermined conditions; and at least one of cleaning area coverage, moving velocity, an amount of water supplied from the water supplying unit per unit time and a cleaning concentration level is varied by movement of the robot cleaner depending on the sequential change of the traveling patterns by the sequence information.

9. The method for controlling a robot cleaner of claim 8, wherein the changing of the traveling patterns includes sequentially changing the traveling patterns so that a traveling pattern in which the amount of water supplied per unit time is large is first performed depending on the sequence information.

10. The method for controlling a robot cleaner of any one of claims 8 to 9, wherein in the changing of the traveling patterns, a moving velocity of the robot cleaner is varied depending on the sequential change of the traveling patterns by the sequence information, and the traveling patterns are sequentially changed so that a traveling pattern in which the moving velocity is rapid is first performed depending on the sequence information.

11. The method for controlling a robot cleaner of any one of claims 8 to 10, further comprising:
receiving a mode input in a process of performing a specific traveling pattern; and
changing the traveling pattern into a next traveling pattern depending on the sequence information regardless of the predetermined conditions when the mode input is received.

12. A computer-readable storage medium comprising instructions which, when executed by a computer, cause the computer to carry out the method for controlling a robot cleaner of any one of claims 8 to 11.

## Patentansprüche

1. Reinigungsroboter (100), umfassend:
eine Eingabeeinheit (120), die eine Benutzereingabe empfängt;
eine Speichereinheit (150), die eine Vielzahl von Bewegungsmustern und Planungsinformationen zum Bewegen des Reinigungsroboters (100) darin speichert;
eine Wasserversorgungseinheit (150), die einem Reiniger, der an dem Reinigungsroboter (100) angebracht ist, Wasser zuführt; und
eine Steuereinheit (110), die die Bewegung des Reinigungsroboters (100) in Abhängigkeit von der Benutzereingabe steuert und die Bewegungsmuster basierend auf der Vielzahl von Bewegungsmustern und den Planungsinformationen ändert,
**dadurch gekennzeichnet, dass** die Planungsinformationen Sequenzinformationen zum sequenziellen Ändern von zwei oder mehr Bewegungsmustern in Abhängigkeit von vorbestimmten Bedingungen beinhalten; und mindestens eines aus Reinigungsbereichsabdeckung, Bewegungsgeschwindigkeit, einer Wassermenge, die von der Wasserversorgungseinheit (150) pro Zeiteinheit zugeführt wird, und einem Reinigungskonzentrationsniveau durch Bewegung des Reinigungsroboters (100) in Abhängigkeit von der sequenziellen Änderung der Bewegungsmuster durch die Sequenzinformationen variiert wird.

2. Reinigungsroboter (100) nach Anspruch 1, wobei die Steuereinheit (110) die Bewegungsmuster sequenziell derart ändert, dass ein Bewegungsmuster, in dem die Menge des zugeführten Wassers pro Zeiteinheit groß ist, in Abhängigkeit von den Sequenzinformationen zuerst durchgeführt wird.

3. Reinigungsroboter (100) nach einem der Ansprüche 1 bis 2, wobei eine Bewegungsgeschwindigkeit des Reinigungsroboters (100) in Abhängigkeit von der sequenziellen Änderung der Bewegungsmuster durch die Sequenzinformationen variiert wird und die Steuereinheit (110) die Bewegungsmuster sequenziell derart ändert, dass ein Bewegungsmuster, in dem die Bewegungsgeschwindigkeit schnell ist, in Abhängigkeit von den Sequenzinformationen zuerst durchgeführt wird.

4. Reinigungsroboter (100) nach einem der Ansprüche 1 bis 3, wobei ein erstes Bewegungsmuster der Mehrzahl von Bewegungsmustern ein Muster, ist, das den Reinigungsroboter (100) zur Bewegung in einer Bogenform durch periodisches Steuern einer vordefinierten Winkelgeschwindigkeit basierend auf einer Fortbewegungsrichtung des Reinigungsroboters (100) in Abhängigkeit von einer Bewegungsgeschwindigkeit des Reinigungsroboters (100) steuert.

5. Reinigungsroboter (100) nach einem der Ansprüche 1 bis 4, wobei ein zweites Bewegungsmuster der Mehrzahl von Bewegungsmustern ein Muster ist, das den Reinigungsroboter (100) dazu steuert, sich periodisch entlang kreisförmiger Wege basierend auf einem linearen Fortbewegungsabschnitt des Reinigungsroboters (100) zu bewegen und dann entlang des linearen Fortbewegungsabschnitts in Abhängigkeit von einer Bewegungsgeschwindigkeit des Reinigungsroboters (100) fortzufahren.

6. Reinigungsroboter (100) nach einem der Ansprüche 1 bis 5, wobei ein drittes Bewegungsmuster der Mehrzahl von Bewegungsmustern ein Muster ist, das einen ersten Schritt des Bewegens des Reinigungsroboters (100) in einer Vorwärtsrichtung einer Seitendiagonale basierend auf einer Fortbewegungslinie des Reinigungsroboters (100) beinhaltet und einen zweiten Schritt des Bewegens des Reinigungsroboters (100) in einer Rückwärtsrichtung der anderen Seitendiagonale in einem Zustand, in dem der Reinigungsroboter (100) sich vorwärts bewegt, wobei eine Vorwärtsbewegungsentfernung des ersten Schrittes länger als eine Rückwärtsbewegungsentfernung des zweiten Schrittes basierend auf einer Entfernung auf der Fortbewegungslinie ist.

7. Reinigungsroboter (100) nach einem der Ansprüche 1 bis 6, wobei die Steuereinheit (110) Eigenschaften des Reinigungsroboters (100) anwendet, zurückgeführt um eine zweite Entfernung, die kürzer als eine erste Entfernung entlang einer vorbestimmten Route ist, wenn der Reinigungsroboter (100) um die erste Entfernung entlang der vorbestimmten Route, in Bezug auf ein Bewegungsmuster, das derzeit durchgeführt wird, in dem Fall bewegt wird, in dem in Abhängigkeit von der Benutzereingabe ein Kehrmodus ausgewählt wurde.

8. Verfahren zum Steuern eines Reinigungsroboters, umfassend:
Speichern einer Vielzahl von Bewegungsmustern und Planungsinformationen zum Bewegen des Reinigungsroboters;
Empfangen einer Benutzereingabe; und
Steuern der Bewegung des Reinigungsroboters in Abhängigkeit von der Benutzereingabe und Ändern der Bewegungsmuster basierend auf der Mehrzahl von Bewegungsmustern und den Planungsinformationen,
**dadurch gekennzeichnet, dass** die Planungsinformationen Sequenzinformationen zum sequenziellen Ändern von zwei oder mehr Bewegungsmustern in Abhängigkeit von vorbestimmten Bedingungen beinhalten; und mindestens eines aus Reinigungsbereichsabdeckung, Bewegungsgeschwindigkeit, einer Wassermenge, die von der Wasserversorgungseinheit pro Zeiteinheit zugeführt wird, und einem Reinigungskonzentrationsniveau durch Bewegung des Reinigungsroboters in Abhängigkeit von der sequenziellen Änderung der Bewegungsmuster durch die Sequenzinformationen variiert wird.

9. Verfahren zum Steuern eines Reinigungsroboters nach Anspruch 8, wobei das Ändern der Bewegungsmuster ein sequenzielles Ändern der Bewegungsmuster derart beinhaltet, dass ein Bewegungsmuster, in dem die Menge des Wassers, das pro Zeiteinheit zugeführt wird, groß ist, in Abhängigkeit von den Sequenzinformationen zuerst durchgeführt wird.

10. Verfahren zum Steuern eines Reinigungsroboters nach einem der Ansprüche 8 bis 9, wobei bei dem Ändern der Bewegungsmuster eine Bewegungsgeschwindigkeit des Reinigungsroboters in Abhängigkeit von der sequenziellen Änderung der Bewegungsmuster durch die Sequenzinformationen variiert wird und die Bewegungsmuster derart sequenziell geändert werden, dass ein Bewegungsmuster, in dem die Bewegungsgeschwindigkeit schnell ist, in Abhängigkeit von den Sequenzinformationen zuerst durchgeführt wird.

11. Verfahren zum Steuern eines Reinigungsroboters nach einem der Ansprüche 8 bis 10, ferner umfassend:
Empfangen einer Moduseingabe in einem Prozess des Durchführens eines spezifischen Bewegungsmusters; und
Ändern des Bewegungsmusters in ein nächstes Bewegungsmuster in Abhängigkeit von den Sequenzinformationen, ungeachtet der vorbestimmten Bedingungen, wenn die Moduseingabe empfangen wird.

12. Computerlesbares Speichermedium, das Anweisungen umfasst, die, wenn sie von einem Computer ausgeführt werden, den Computer veranlassen, das Verfahren zum Steuern eines Reinigungsroboters nach einem der Ansprüche 8 bis 11 durchzuführen.

## Revendications

1. Robot nettoyeur (100) comprenant :
une unité d'entrée (120) recevant une entrée d'utilisateur ;
une unité d'enregistrement (150) enregistrant une pluralité de trajectoires de déplacement et des informations de programmation pour déplacer le robot nettoyeur (100) ;
une unité d'alimentation en eau (150) alimentant en eau un élément nettoyeur attaché au robot nettoyeur (100) ; et
une unité de commande (100) contrôlant le déplacement du robot nettoyeur (100) en fonction d'une entrée d'utilisateur et modifiant les trajectoires de déplacement sur la base de la pluralité des trajectoires de déplacement et des informations de programmation,
**caractérisé en ce que** les informations de programmation comprennent des informations de séquence pour modifier de façon séquentielle deux ou plusieurs trajectoires en fonction de conditions prédéterminées ; et **en ce qu'**au moins un élément parmi une couverture de zone de nettoyage, une vitesse de déplacement, une quantité d'eau fournie par l'unité d'alimentation en eau (150) par unité de temps et un niveau de concentration de nettoyage est varié par le mouvement du robot nettoyeur (100) en fonction de la modification séquentielle des trajectoires de déplacement par les informations de séquence.

2. Robot nettoyeur (100) selon la revendication 1, l'unité de commande (110) modifiant de façon séquentielle les trajectoires de déplacement de telle sorte qu'une trajectoire de déplacement lors de laquelle la quantité d'eau fournie par unité de temps est élevée est exécutée en premier en fonction des informations de séquence.

3. Robot nettoyeur (100) selon l'une quelconque des revendications 1 à 2, une vitesse de déplacement du robot nettoyeur (100) étant variée en fonction de la modification séquentielle des trajectoires de déplacement par les informations de séquence, et l'unité de commande (110) modifiant de façon séquentielle les trajectoires de déplacement de telle sorte qu'une trajectoire de déplacement lors de laquelle la vitesse de déplacement est rapide est exécutée en premier en fonction des informations de séquence.

4. Robot nettoyeur (100) selon l'une quelconque des revendications 1 à 3, une première trajectoire de déplacement de la pluralité de trajectoires de déplacement étant une trajectoire commandant au robot nettoyeur (100) de se déplacer sur un trajet courbe en contrôlant périodiquement une vitesse angulaire prédéfinie sur la base d'une direction avant du robot nettoyeur (100) en fonction d'une vitesse de déplacement du robot nettoyeur (100).

5. Robot nettoyeur (100) selon l'une quelconque des revendications 1 à 4, une deuxième trajectoire de déplacement de la pluralité de trajectoires de déplacement étant une trajectoire commandant au robot nettoyeur (100) de se déplacer périodiquement sur des itinéraires circulaires sur une section d'avance linéaire du robot nettoyeur (100) et ensuite avancer le long de la section d'avance linéaire en fonction d'une vitesse de déplacement du robot nettoyeur (100).

6. Robot nettoyeur (100) selon l'une quelconque des revendications 1 à 5, une troisième trajectoire de déplacement de la pluralité de trajectoires de déplacement étant une trajectoire comprenant une première étape de déplacement du robot nettoyeur (100) dans une direction avant d'une diagonale latérale sur la base d'une ligne d'avance du robot nettoyeur (100), et une deuxième étape de déplacement du robot nettoyeur (100) dans une direction inverse de l'autre diagonale latérale dans un état dans lequel le robot nettoyeur (100) avance, une distance avant de la première étape étant plus longue qu'une distance inverse de la deuxième étape sur la base d'une distance de la ligne d'avance.

7. Robot nettoyeur (100) selon l'une quelconque des revendications 1 à 6, l'unité de commande (110) appliquant des caractéristiques au robot nettoyeur (100) retournées par une deuxième distance plus courte qu'une première distance sur un itinéraire prédéterminé lorsque le robot nettoyeur (100) est déplacé sur la première distance sur un itinéraire prédéterminé, relativement à une trajectoire de déplacement qui est exécutée actuellement, dans le cas où un mode de balayage est sélectionné sur la base de l'entrée d'utilisateur.

8. Procédé pour commander un robot nettoyeur, comprenant :
enregistrer une pluralité de trajectoires de déplacement et des informations de programme pour déplacer le robot nettoyeur ;
recevoir une entrée d'utilisateur ; et
contrôler le déplacement du robot nettoyeur en fonction de l'entrée d'utilisateur et modifier les trajectoires de déplacement sur la base de la pluralité des trajectoires de déplacement et des informations de programmation,
**caractérisé en ce que** les informations de programmation comprennent des informations de séquence pour modifier de façon séquentielle deux ou plusieurs trajectoires en fonction de conditions prédéterminées ; et **en ce qu'**au moins un élément parmi une couverture de zone de nettoyage, une vitesse de déplacement, une quantité d'eau fournie par l'unité d'alimentation en eau par unité de temps et un niveau de concentration de nettoyage est varié par le mouvement du robot nettoyeur en fonction de la modification séquentielle des trajectoires de déplacement par les informations de séquence.

9. Procédé pour commander un robot nettoyeur selon la revendication 8, la modification des trajectoires de déplacement comprenant modifier de façon séquentielle les trajectoires de déplacement de telle sorte qu'une trajectoire de déplacement lors de laquelle la quantité d'eau alimentée par l'unité de temps est élevée est exécutée en premier en fonction des informations de séquence.

10. Procédé pour commander un robot nettoyeur selon l'une quelconque des revendications 8 à 9, une vitesse de déplacement du robot nettoyeur étant variée en fonction de la modification séquentielle des trajectoires de déplacement par les informations de séquence, lors de la modification des trajectoires de déplacement, et les trajectoires de déplacement étant modifiées de telle sorte qu'une trajectoire de déplacement lors de laquelle la vitesse de déplacement est rapide est exécutée en premier en fonction des informations de séquence.

11. Procédé pour commander un robot nettoyeur selon l'une quelconque des revendications 8 à 10, comprenant en outre :
recevoir une entrée de mode dans un processus d'exécution d'une trajectoire de déplacement spécifique ; et
changer la trajectoire de déplacement en une trajectoire de déplacement suivante en fonction des informations de séquence indépendamment des conditions prédéterminées lorsque l'entrée de mode est reçue.

12. Moyen d'enregistrement pouvant être lu par ordinateur comprenant des instructions, lesquelles, lorsque exécutées par un ordinateur, déclenchent l'exécution par l'ordinateur du procédé pour commander un robot nettoyeur selon l'une quelconque des revendications 8 à 11.
